# FASCICULE DE BREVET EUROPEEN

(11) **EP 2 925 993 B1**
(45) Date de publication et mention de la délivrance du brevet: **05.10.2016**
(21) Numéro de dépôt: 13801660.5
(22) Date de dépôt: 14.11.2013
(51) Int. Cl.: F02K 3/06, B64C 11/14, F02C 7/04

(54) **CAPOT DE TURBOMACHINE APTE A RECOUVRIR UN CONE DE SOUFFLANTE**
TURBINENMOTORHAUBE ZUM ABDECKEN EINES LÜFTERKONUS
TURBINE ENGINE COWL CAPABLE OF COVERING A FAN CONE

(30) Priorité: 29.11.2012 FR 1261416
(43) Date de publication de la demande: 07.10.2015
(73) Titulaire: Snecma, 75015 Paris (FR)
(72) Inventeur: MERLOT, Damien, 77000 Vaux-Le-Penil (FR)
(74) Mandataire: Cabinet Camus Lebkiri
(86) Numéro de dépôt international: PCT/FR2013/052738
(87) Numéro de publication internationale: WO 2014/083256

(56) Documents cités:
- EP-A1- 0 311 514
- FR-A1- 2 168 938
- GB-A- 2 046 843

## Description

### DOMAINE TECHNIQUE DE L'INVENTION

La présente invention se rapporte au domaine des turbomachines, et plus particulièrement aux turbomachines pour aéronef, de préférence du type turboréacteurs. Plus précisément, l'invention concerne un cône de soufflante de turboréacteur.

### ARRIERE PLAN TECHNOLOGIQUE DE L'INVENTION

Un turboréacteur comprend à son extrémité amont une entrée d'air alimentant une soufflante et un compresseur dont les aubes sont portées par des disques solidaires d'un arbre qui s'étend sur une majeure partie du turboréacteur et qui est entraîné en rotation par une turbine du turboréacteur. On note que les termes « amont » et « aval » sont à considérer par rapport à une direction générale d'écoulement de fluides à travers le turboréacteur, allant de l'amont vers l'aval.

Un cône d'entrée est monté à l'extrémité amont de cet arbre pour dévier une partie du flux d'air qui pénètre à l'intérieur du turboréacteur vers les aubes de la soufflante, ce flux étant ensuite séparé en un flux primaire qui passe dans un orifice d'admission du compresseur, et en un flux secondaire qui s'écoule autour du compresseur et qui est ensuite mélangé au flux primaire et/ou alimente des circuits de refroidissement de composants du turboréacteur.

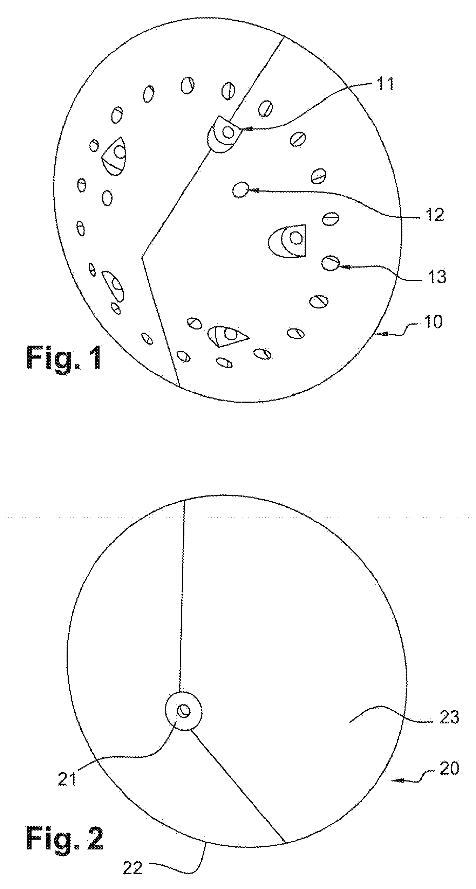

La figure 1 représente schématiquement un tel cône d'entrée 10. La fixation axiale du cône d'entrée 10 sur l'arbre est généralement réalisée au moyen de vis insérées dans des trous de fixation 11 situés sur le cône 10, qui sont à titre d'exemple indicatif au nombre de cinq. Le cône 10 comporte en outre des trous de démontage 12, classiquement au nombre de trois, permettant l'extraction progressive du cône 10 dans la direction axiale. Par ailleurs le cône peut assurer une fonction d'équilibrage du turboréacteur. Le cône 10 est alors équipé d'une pluralité de trous pour vis d'équilibrage 13 espacés circonférentiellement les uns des autres. A titre d'exemple indicatif, ce sont par exemple vingt trous radiaux 13 qui sont prévus sur le cône, autant que d'aubes Fan. En choisissant judicieusement les poids des vis d'équilibrage, on équilibre le turboréacteur.

Les trous de fixation 11, les trous de démontage 12 et les trous pour vis d'équilibrage 13 sont autant de discontinuités géométriques responsables de perturbations pour le flux en amont de la soufflante, et dégradent l'aérodynamisme du système.

Un cône de soufflante de turbomachine selon l'art antérieur est connu par le document EP0311514

### DESCRIPTION GENERALE DE L'INVENTION

L'objet de l'invention offre une solution aux problèmes évoqués précédemment, en proposant une solution permettant d'éliminer ces perturbations aérodynamiques.

L'invention concerne donc essentiellement un capot de turbomachine adapté pour recouvrir un cône de soufflante, comportant des moyens de fixation aptes à coopérer avec des moyens de connexion dudit cône afin de maintenir solidaires ledit capot et ledit cône.

Grâce à l'invention, les trous du cône sont recouverts par le capot. Les discontinuités géométriques responsables des perturbations aérodynamiques sont ainsi supprimées. Outre les caractéristiques qui viennent d'être évoquées dans le paragraphe précédent, le capot selon l'invention peut présenter une ou plusieurs caractéristiques complémentaires parmi les suivantes, considérées individuellement ou selon toutes les combinaisons techniquement possibles :
- il présente une surface interne complémentaire à la surface externe du cône. Cela permet de limiter l'encombrement dû au capot.
- il présente une surface externe sensiblement uniforme. On entend par sensiblement uniforme une surface sensiblement lisse, ne présentant pas de discontinuités géométriques macroscopiques. Ainsi, l'air s'écoule de manière aérodynamique sur le capot.
- les moyens de fixation comportent :
   o une pluralité de dents disposées au niveau d'une base du capot, lesdites dents étant adaptées pour être emboitées dans des encoches du cône ;
   o une pluralité de parties saillantes faisant saillie des dents, et adaptées pour coulisser dans des rainures du cône débouchant dans lesdites encoches.
   Ainsi, le capot est inséré axialement sur le cône par translation selon l'axe de révolution du cône, les dents s'emboitant dans les encoches. Une fois la translation terminée, le capot ou le cône subit une rotation autour de l'axe de révolution du cône, les parties saillantes coulissant dans les rainures. Cela permet d'éviter que le capot ne se désolidarise du cône sous l'effet de la force centrifuge liée à la rotation du cône.
- les dents sont au nombre de quatre. Toutefois, trois dents suffisent à maintenir le capot correctement sur le cône sans risque d'ovalisation. Quatre dents permettent un guidage précis des dents dans les encoches lors de l'insertion axiale, et une bonne accroche du capot, ce qui présente un intérêt en cas d'ingestion d'oiseaux.
- une dent est de largeur différente des largeurs des autres dents, par exemple de largeur plus faible. Cette dent est adaptée pour être emboîtée dans une encoche de largeur adéquate, ladite encoche assurant une fonction de détrompeur. Cela permet d'éviter de perdre l'équilibrage du cône suite au montage ou démontage du capot. Les autres dents sont avantageusement de largeur identique, ce qui simplifie l'usinage du capot.
- les moyens de maintien comportent une vis apte à être vissée sur un écrou serti du cône, ledit écrou serti étant positionné au niveau de la pointe du cône. La vis aide à maintenir le capot en position sur le cône.

L'invention concerne également un cône de soufflante comportant des moyens de connexions aptes à coopérer avec des moyens de fixation d'un capot de turbomachine adapté pour recouvrir ledit cône, afin de maintenir solidaires ledit cône et ledit capot.

Un tel cône est adapté pour être recouvert par un capot tel que décrit précédemment.

Outre les caractéristiques qui viennent d'être évoquées dans le paragraphe précédent, le capot selon l'invention peut présenter une ou plusieurs caractéristiques complémentaires parmi les suivantes, considérées individuellement ou selon toutes les combinaisons techniquement possibles :
- les moyens de connexion comportent :
   o une pluralité d'encoches disposées au niveau d'une base du cône, lesdites encoches étant adaptées pour recevoir des dents du capot ;
   o une pluralité de rainures débouchant dans les encoches, et adaptées pour recevoir des parties saillantes faisant saillie des dents.
- les encoches sont au nombre de quatre.
- une encoche est de largeur différente des largeurs des autres encoches.
- les moyens de connexion comportent un écrou serti positionné au niveau de la pointe du cône.

L'invention concerne également un ensemble comportant un capot tel que décrit précédemment et un cône tel que décrit précédemment.

L'invention et ses différentes applications seront mieux comprises à la lecture de la description qui suit et à l'examen des figures qui l'accompagnent.

### BREVE DESCRIPTION DES FIGURES

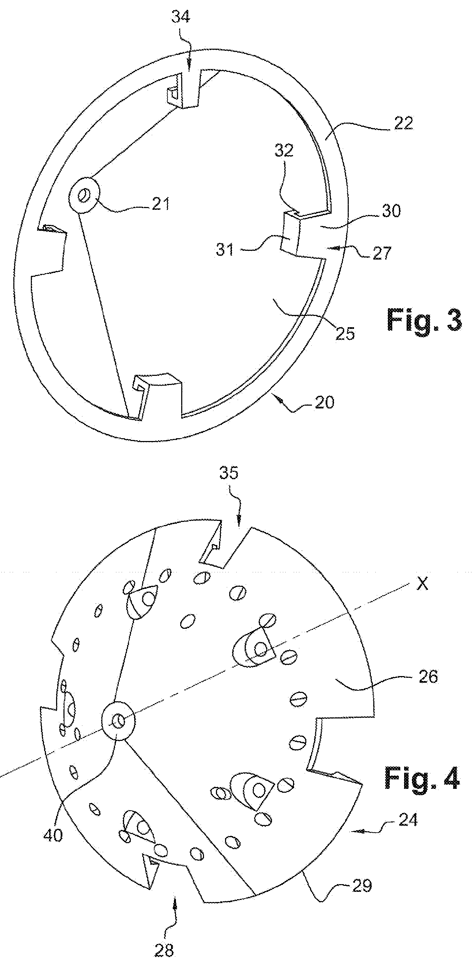

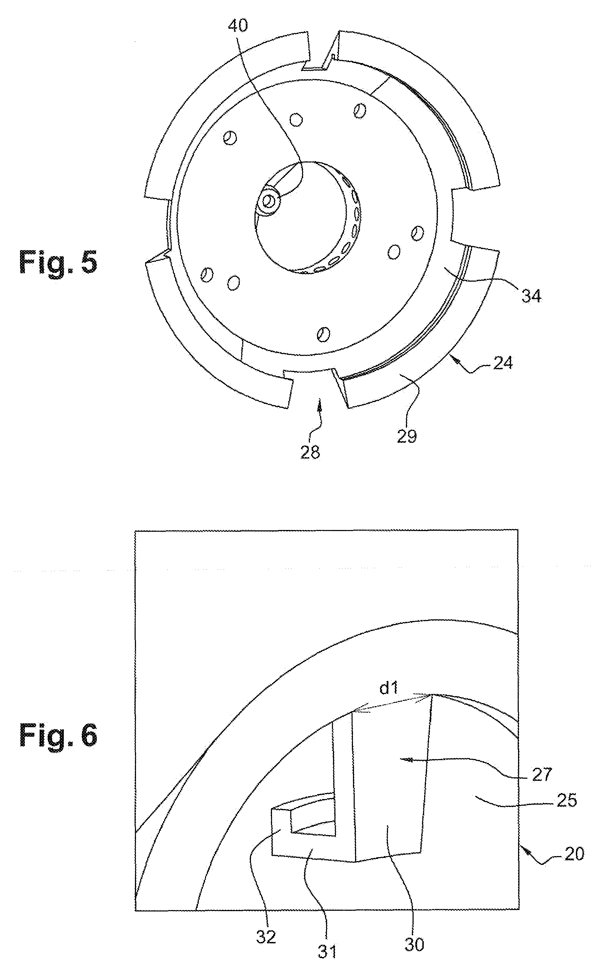

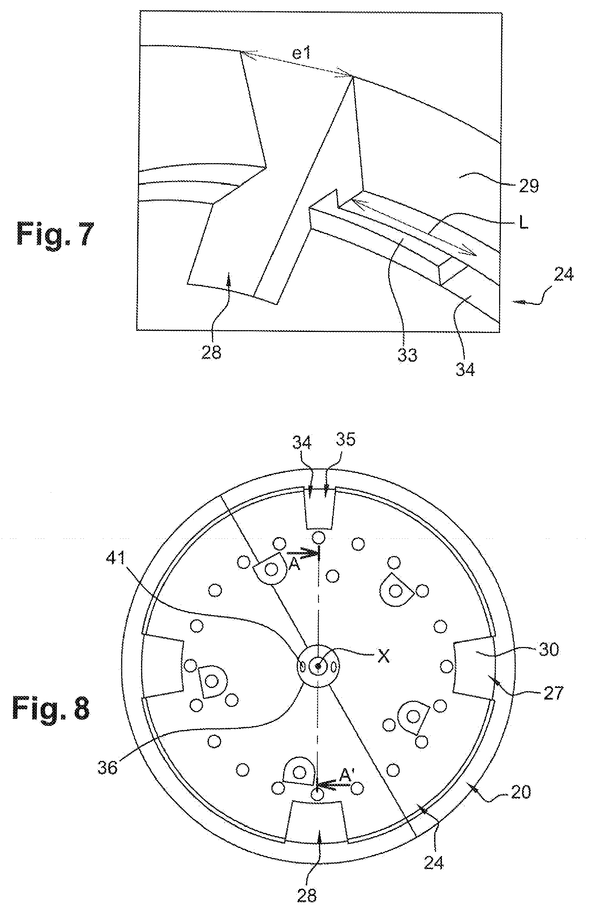

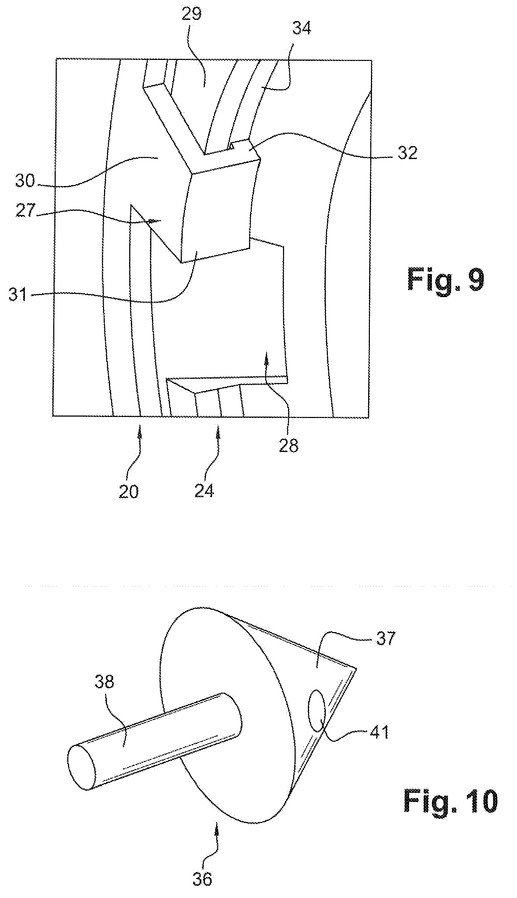

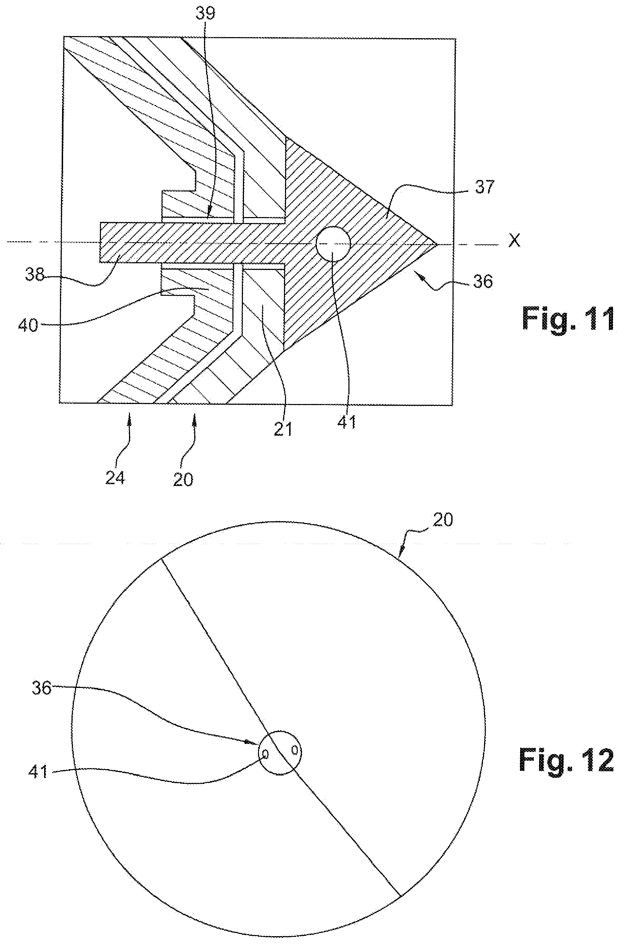

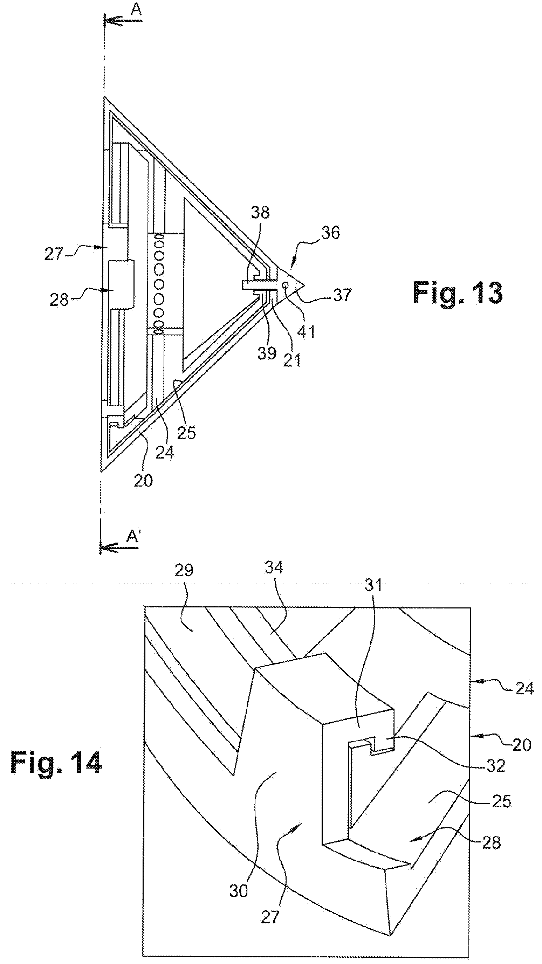

Les figures ne sont présentées qu'à titre indicatif et nullement limitatif de l'invention. Les figures montrent :
- A la figure 1, déjà décrite, une représentation schématique d'un cône d'entrée selon l'art antérieur;
- A la figure 2, une représentation schématique d'un capot selon un mode de réalisation de l'invention, en vue amont ;
- A la figure 3, une représentation schématique du capot de la figure 2, en vue aval ;
- A la figure 4, une représentation schématique d'un cône selon un mode de réalisation de l'invention, en vue amont ;
- A la figure 5, une représentation schématique du cône de la figure 4, en vue aval ;
- A la figure 6, une représentation schématique d'une dent du capot de la figure 2 ;
- A la figure 7, une représentation schématique d'une encoche du cône de la figure 4;
- A la figure 8, une représentation schématique d'un ensemble comprenant le capot de la figure 2 et le cône de la figure 4, ledit capot recouvrant ledit cône, en vue amont en transparence ;
- A la figure 9, une représentation schématique de la dent de la figure 6 coopérant avec l'encoche de la figure 7 ;
- A la figure 10, une représentation schématique d'une vis de maintien du capot de la figure 2 sur le cône de la figure 4 ;
- A la figure 11, une représentation schématique de l'ensemble comprenant le capot de la figure 2, le cône de la figure 4 et la vis de la figure 10 ;
- A la figure 12, une représentation schématique du capot de la figure 2 recouvrant le cône de la figure 4, en vue en amont ;
- A la figure 13, une représentation schématique du capot de la figure 2 recouvrant le cône de la figure 4, en vue en coupe ;
- A la figure 14, une partie de la figure 13 en perspective.

### DESCRIPTION DETAILLEE D'AU MOINS UN MODE DE REALISATION DE L'INVENTION

Sauf précision contraire, un même élément apparaissant sur des figures différentes présente une référence unique.

L'invention permet de supprimer les perturbations aérodynamiques d'un flux d'air au niveau d'un cône de soufflante, lesdites perturbations étant dues aux discontinuités géométriques sur la surface externe dudit cône résultant des divers trous énumérés précédemment. Pour cela, un capot est mis en place sur le cône. Le capot et le cône présentent tous deux des moyens permettant de coopérer afin de les solidariser l'un par rapport à l'autre.

Un capot 20 selon un mode de réalisation non limitatif de l'invention est représenté de manière schématique aux figures 2 et 3. La figure 2 représente le capot 20 en vue amont, tandis que la figure 3 le représente en vue aval. Les termes « amont » et « aval » sont à considérer par rapport à une direction générale d'écoulement de l'air sur le capot 20 lorsque celui-ci est installé sur le cône de soufflante, l'air allant de l'amont vers l'aval. Le capot 20 ayant une forme globalement conique, l'air s'écoule sur le capot 20 depuis sa pointe 21 vers sa base 22.

Comme montré à la figure 2, le capot 20 présente une surface externe 23 sensiblement uniforme, c'est-à-dire sensiblement lisse, c'est-à-dire ne présentant pas de discontinuités géométriques macroscopiques. Ainsi le fluide s'écoulant sur le capot 20 au lieu du cône ne subit pas de perturbation aérodynamique.

Le capot 20 est adapté pour être installé sur un cône 24 représenté schématiquement aux figures 4 et 5. La figure 4 représente le capot 20 en vue amont, tandis que la figure 5 le représente en vue aval. La surface interne 25 du capot 20 est de forme complémentaire à la surface externe 26 du cône 24, ce qui permet notamment de limiter l'encombrement dû au capot 20 installé sur le cône 24.

Afin de maintenir solidaires le capot 20 et le cône 24 en translation et en rotation, le capot 20 comporte des moyens de fixation et le cône 24 comporte des moyens de connexion, les moyens de fixation et les moyens de connexion étant adaptés pour coopérer. Comme montré sur la figure 3, les moyens de fixation comportent quatre dents 27 prenant naissance sur la surface interne 25 du capot 20 au niveau de la base 22 du capot 20 et s'étendant à l'intérieur du capot 20. On appelle intérieur du capot 20 le volume délimité par la surface interne 25 et la base 22 du capot 20. Les quatre dents 27 sont destinées à être emboitées dans quatre encoches 28 du cône 24, montrées aux figures 4 et 5, lesdites encoches 28 étant situées au niveau de la base 29 du cône 24. Les encoches 28 font partie des moyens de connexion. Pour une meilleure compréhension, une dent 27 et une encoche 28 sont représentées aux figures 6 et 7.

La figure 6 représente schématiquement une dent 27 du capot 20. Ladite dent 27 comporte une première partie 30 s'étendant dans le plan de base et prenant naissance à partir de la surface interne 25 du capot 20. On appelle largeur d1 de la dent 27, la dimension de la corde de l'arc de cercle d'où la première partie 30 prend naissance. La première dent 27 comporte également un retour en forme de L comprenant une deuxième partie 31 et une saillie 32. La deuxième partie 31 correspond à la grande barre du L, tandis que la saillie 32 correspond à la petite barre du L. La deuxième partie 31 prend naissance à l'extrémité de la première partie 30 et s'étend orthogonalement au plan de base 22 du capot 20 vers l'amont. La saillie 32 s'étend parallèlement à la première partie 30 en direction de la surface interne 25 du capot 20.

La figure 7 représente une encoche 28 du cône 24. Ladite encoche 28 est une ouverture sensiblement rectangulaire traversant la paroi du cône 24, et prenant naissance à la base 29 du cône 24. On appelle largeur e1 de l'encoche 28 la dimension de la corde de l'arc de cercle d'où l'encoche 28 prend naissance. Les moyens de connexion du cône 24 comportent en outre quatre rainures 33, chacune étant située au niveau d'une encoche 28. Une rainure 33 associée à l'encoche 28 décrite précédemment est représentée en figure 7. La rainure 33 est un retrait de matière de la surface interne 34 du cône 24, s'étendant parallèlement au plan de base sur une longueur L, et débouchant dans l'encoche 28. Les rainures 33 s'étendent soit toutes vers la droite des encoches 28, soit toutes vers la gauche des encoches 28.

Chaque dent 27 est associée à une encoche 28 dans laquelle elle est destinée à s'emboiter. Dans le mode de réalisation décrit, trois encoches 28 sont de même largeur e1, qui correspond également à la largeur d1 de trois dents 27, et la quatrième encoche 35 est de largeur inférieure, qui correspond également à la largeur de la quatrième dent 34. Les encoches 28 et les dents 27 de même largeur sont associées. La quatrième dent 34 et la quatrième encoche 35 jouent un rôle de détrompeur, afin qu'il n'y ait pas d'ambiguïté sur les associations encoche 28/dent 27 et qu'une seule position du capot 20 sur le cône 24 soit possible. Cela permet d'éviter que l'équilibrage du cône 24 suite au montage ou au démontage du capot 20 ne soit perdu.

Le montage du capot 20 sur le cône 24 est effectué de la manière suivante :
- le capot 20 est translaté axialement selon l'axe de révolution X du cône 24, de l'amont vers l'aval, de sorte à recouvrir la surface externe 26 du cône 24. Chaque dent 27 s'emboite alors dans l'encoche 28 qui lui est associée. On note qu'il n'y a pas d'ambigüité quant aux associations dent 27/encoche 28 grâce à l'encoche de détrompage 35 et la dent de détrompage 34. La translation est effectuée jusqu'à ce que la surface interne 25 du capot 20 repose sur la surface externe 26 du cône 24. Cette situation est illustrée à la figure 8, dans laquelle le capot 20 est représenté recouvrant le cône 24 en vue amont et en transparence, ce qui signifie que les parties du capot 20 superposées au cône 24 sont représentées transparentes. On constate que les premières parties 30 des dents 27 sont emboitées dans les encoches 28.
- une fois la translation terminée, le capot 20 subit une rotation de manière à faire coulisser la saillie 32 de chaque dent 27 dans une rainure 33. Cela permet de bloquer le capot 20 en translation selon l'axe de révolution X, et d'éviter qu'il ne se désengage du cône 24. On note qu'avantageusement, les rainures 33 s'étendent toutes sur le cône 24 dans une direction identique au sens de rotation du cône 24 lorsque celui-ci est en fonctionnement. Ainsi, la rotation subie par le capot 20 est effectuée dans un sens opposé au sens de rotation. Cela permet d'éviter que le capot 20 ne se démonte du cône 24 en fonctionnement sous l'effet de la force centrifuge. La figure 9 représente schématiquement une dent 27 dont une saillie 32 est logée dans une rainure 33. Avantageusement, la longueur L de la rainure 33 est telle que le capot 20 puisse subir une rotation d'un angle compris entre cinq et trente degrés lors de l'étape de rotation. Cet angle garantit une robustesse suffisante du capot 20 aux opérations de montage et démontage, et permet de limiter les opérations d'usinage sur le cône 24. Toutefois, cet intervalle est indicatif et une rotation du capot 20 d'un angle sensiblement supérieur est envisageable.

Les moyens de fixation comportent en outre une vis 36, dont une représentation schématique est montrée à la figure 10. La vis 36 comporte une pointe 37 de forme conique et une tige 38. Par ailleurs, les moyens de connexion comportent un écrou 39 serti installé au niveau de la pointe 40 du cône 24. La tige 38 de la vis 36 est destinée à être vissée dans l'écrou 39 serti afin d'aider au maintien du capot 20 sur le cône 24 après l'étape de rotation, comme représenté à la figure 11. La pointe 37 de la vis 36 comporte un trou 41 traversant servant à laisser passer un outil qui permet le serrage de la vis 36 sur l'écrou 39, ou son desserrage lorsque l'on souhaite démonter le capot 20. On note que, étant positionnée au niveau de la pointe 21 du capot 20, la pointe 37 de la vis 36 est de forme conique pour ne pas perturber l'écoulement aérodynamique du fluide sur le capot 20. Le capot 20 installé sur le cône 24 après son montage, c'est-à-dire après les étapes de translation, rotation et insertion de la vis 36, est représenté à la figure 12. On remarque que les trous visibles par le flux d'air au niveau du cône 24 sont réduits à deux : les trous 41 nécessaires à la mise en place de la vis 36 sur l'écrou 39 serti. Le capot 20 permet donc de réduire les perturbations du flux, et permet un gain aérodynamique.

La figure 13 est une vue en coupe du capot 20 installé sur le cône 24 selon un plan de coupe AA' introduit à la figure 8. Pour une meilleure compréhension, la zone inférieure de cette figure est représentée agrandie et en trois dimensions à la figure 14.

On note que l'impact du capot 20 sur les pièces environnantes est minime, puisque le capot 20 épouse la forme du cône 24. De plus, il est aisé de monter ou démonter le capot 20. Par ailleurs, le capot 20 et son maintien en position sur le cône 24 résistent aux forces centrifuges liées à la rotation du cône 24. Enfin, le capot 20 ne remet pas en cause la fonction d'équilibrage assurée par le cône 24 grâce à la dent de détrompage 34 et l'encoche de détrompage 35.

L'invention n'est pas limitée au mode de réalisation décrit et des variantes peuvent être envisagées, notamment :
- les nombre de dents 27 et d'encoches 28 n'est pas nécessairement quatre. Quatre dents 27 assurent un bon maintien et un guidage précis du capot 20 sur le cône 24 mais trois dents 27 suffisent. On note que le maintien du capot 20 est important à cause des risques d'ingestion d'oiseaux. Un nombre plus important de dents 27 est également envisageable.
- La dent de détrompage 34 et l'encoche de détrompage 35 peuvent être de largeur supérieure aux largeurs des autres dents 27/encoches 28.
- Les autres dents 27 peuvent être de largeur différente, cependant l'usinage du capot 20 est simplifié par des dents 27 de même largeur. Il en est de même en ce qui concerne les encoches 28.

## Revendications

1. Cône (24) tournant de soufflante de turbomachine, **caractérisé en ce que en ce qu'**il comporte des moyens de connexion (28, 33, 39) aptes à coopérer avec des moyens de fixation (27, 32, 36) d'un capot (20) de turbomachine adapté pour recouvrir ledit cône (24), afin de maintenir solidaires ledit cône (24) et ledit capot (20), les moyens de connexion (28, 33, 39) comportant :
- une pluralité d'encoches (28) disposées au niveau d'une base (29) du cône (24), lesdites encoches (28) étant adaptées pour recevoir des dents (27) du capot (20) ;
- une pluralité de rainures (33) débouchant dans les encoches (28), et adaptées pour recevoir des parties saillantes (32) faisant saillie des dents (27).

2. Cône (24) de soufflante selon la revendication 1, **caractérisé en ce que** les encoches (28) sont au nombre de quatre.

3. Cône (24) de soufflante selon l'une des revendications précédentes, **caractérisé en ce qu'**une encoche (35) est de largeur différente des largeurs des autres encoches (28).

4. Cône (24) de soufflante selon l'une des revendications précédentes, **caractérisé en ce que** les moyens de connexion (28, 33, 39) comportent un écrou (39) serti positionné au niveau de la pointe (40) du cône (24).

5. Ensemble comportant un cône (24) selon l'une des revendications 1 à 4, et un capot (20) de turbomachine adapté pour recouvrir ledit cône (24), ledit capot (20) comportant des moyens de fixation (27, 32, 36) aptes à coopérer avec les moyens de connexion (28, 33, 39) du cône (24) afin de maintenir solidaires ledit capot (20) et ledit cône (24), lesdits moyens de fixation (27, 32, 36) comportant :
- une pluralité de dents (27) disposées au niveau d'une base (22) du capot (20), lesdites dents (27) étant adaptées pour être emboitées dans les encoches (28) du cône (24) ;
- une pluralité de parties saillantes (32) faisant saillie des dents (27), et adaptées pour coulisser dans les rainures (33) du cône (24) débouchant dans les encoches (28).

6. Ensemble selon la revendication précédente, **caractérisé en ce que** les dents (27) du capot (20) sont au nombre de quatre.

7. Ensemble selon l'une des revendications 5 ou 6, **caractérisé en ce qu'**une dent (34) est de largeur différente des largeurs des autres dents (27).

8. Ensemble selon l'une des revendications 5 à 7, **caractérisé en ce que** les moyens de fixation (27, 32, 36) comportent une vis (36) apte à être vissée sur un écrou (39) serti du cône (24), ledit écrou (39) serti étant positionné au niveau de la pointe (40) du cône (24).

9. Ensemble selon l'une des revendications 5 à 8, **caractérisé en ce que** le capot (20) présente une surface externe (23) sensiblement uniforme.

10. Ensemble selon l'une des revendications 5 à 9, **caractérisé en ce que** le capot (20) présente une surface interne (25) complémentaire à une surface externe (26) du cône (24).

## Patentansprüche

1. Sich drehender Kegel (24) eines Gebläses einer Turbomaschine, **dadurch gekennzeichnet, dass** er Anschlussmittel (28, 33, 39) umfasst, die geeignet sind, mit Befestigungsmitteln (27, 32, 36) einer Abdeckung (20) einer Turbomaschine zusammenzuwirken, die geeignet ist, den genannten Kegel (24) abzudecken, um den genannten Kegel (24) und die genannte Abdeckung (20) fest befestigt zu halten, wobei die Anschlussmittel (28, 33, 39) umfassen:
- eine Vielzahl von Einkerbungen (28), die an einer Basis (29) des Kegels (24) angeordnet sind, wobei die genannten Einkerbungen (28) geeignet sind, Verzahnungen (27) der Abdeckung (20) aufzunehmen;
- eine Vielzahl von Rillen (33), die in die Einkerbungen (28) münden und geeignet sind, um hervorstehende Teile (32) aufzunehmen, die aus den Verzahnungen (27) hervorstehen.

2. Kegel (24) eines Gebläses gemäß Anspruch 1, **dadurch gekennzeichnet, dass** die Anzahl der Einkerbungen (28) vier beträgt.

3. Kegel (24) eines Gebläses gemäß einem der voranstehenden Ansprüche, **dadurch gekennzeichnet, dass** eine Einkerbung (35) eine von den Breiten der anderen Einkerbungen (28) unterschiedliche Breite hat.

4. Kegel (24) eines Gebläses gemäß einem der voranstehenden Ansprüche, **dadurch gekennzeichnet, dass** die Anschlussmittel (28, 33, 39) eine eingefasste Mutter (29) umfassen, die an der Spitze (40) des Kegels (24) positioniert ist.

5. Einen Kegel (24) gemäß einem der Ansprüche 1 bis 4 umfassende Gruppe und eine Abdeckung (20) einer Turbomaschine, die geeignet ist, um den genannten Kegel (24) aufzunehmen, wobei die genannte Abdeckung (20) Befestigungsmittel (27, 32, 36) umfasst, die geeignet sind, mit den Anschlussmitteln (28, 33, 39) des Kegels (24) zusammenzuwirken, um die genannte Abdeckung (20) und den genannten Kegel (24) fest befestigt zu halten, wobei die genannten Befestigungsmittel (27, 32, 36) umfassen:
- eine Vielzahl von Verzahnungen (27), die an einer Basis (22) der Abdeckung (20) angeordnet sind, wobei die genannten Verzahnungen (27) geeignet sind, um in die Einkerbungen (28) des Kegels (24) eingerastet zu werden;
- eine Vielzahl von hervorstehenden Teilen (32), die aus den Verzahnungen (27) hervorstehen und geeignet sind, um in den Rillen (33) des in die Einkerbungen (28) einmündenden Kegels (24) zu gleiten.

6. Gruppe gemäß dem voranstehenden Anspruch, **dadurch gekennzeichnet, dass** die Anzahl der Verzahnungen (27) der Abdeckung (20) vier beträgt.

7. Gruppe gemäß einem der Ansprüche 5 oder 6, **dadurch gekennzeichnet, dass** eine Verzahnung (34) eine von den Breiten der anderen Verzahnungen (27) unterschiedliche Breite hat.

8. Gruppe gemäß einem der Ansprüche 5 bis 7, **dadurch gekennzeichnet, dass** die Befestigungsmittel (27, 32, 36) eine Schraube (36) umfassen, die geeignet ist, auf eine eingefasste Mutter (39) des Kegels (24) verschraubt zu werden, wobei die genannte eingefasste Mutter (39) an der Spitze (40) des Kegels (24) positioniert ist.

9. Gruppe gemäß einem der Ansprüche 5 bis 8, **dadurch gekennzeichnet, dass** die Abdeckung (20) eine deutlich einheitliche externe Oberfläche (23) aufweist.

10. Gruppe gemäß einem der Ansprüche 5 bis 9, **dadurch gekennzeichnet, dass** die Abdeckung (20) eine zu einer externen Oberfläche (26) des Kegels (24) komplementäre interne Oberfläche (25) aufweist.

## Claims

1. Rotating fan cone (24) of a turbine engine, **characterised in that** it comprises connection means (28, 33, 39) capable of engaging with attachment means (27, 32, 36) of a turbine engine cowl (20) adapted to cover said cone (24), in order to maintain said cone (24) and said cowl (20) secured to one another, with the connection means (28, 33, 39) comprising:
- a plurality of notches (28) arranged on a base (29) of the cone (24), said notches (28) being adapted to receive teeth (27) of the cowl (20);
- a plurality of grooves (33) opening into the notches (28), and adapted to receive protruding portions (32) protruding from the teeth (27).

2. Fan cone (24) according to claim 1, **characterised in that** the notches (28) are of a number of four.

3. Fan cone (24) according to one of the preceding claims, **characterised in that** one notch (35) is of a width different from the widths of the other notches (28).

4. Fan cone (24) according to one of the preceding claims, **characterised in that** the connection means (28, 33, 39) comprise a rivet nut (39) positioned on the tip (40) of the cone (24).

5. Assembly comprising un cone (24) according to one of claims 1 to 4, and a turbine engine cowl (20) adapted to cover said cone (24), said cowl (20) comprising attachment means (27, 32, 36) capable of engaging with the connection means (28, 33, 39) of the cone (24) in order to maintain said cowl (20) and said cone (24) secured to one another, said attachment means (27, 32, 36) comprising:
- a plurality of teeth (27) arranged on a base (22) of the cowl (20), said teeth (27) being adapted to be nested into the notches (28) of the cone (24);
- a plurality of protruding portions (32) protruding from the teeth (27), and adapted to slide in the grooves (33) of the cone (24) opening into the notches (28).

6. Assembly as claimed in the preceding claim, **characterised in that** the teeth (27) of the cowl (20) are of a number of four.

7. Assembly according to one of claims 5 or 6, **characterised in that** one tooth (34) is of a width different from the widths of the other teeth (27).

8. Assembly according to one of claims 5 to 7, **characterised in that** the attachment means (27, 32, 36) comprise a screw (36) able to be screwed on a rivet nut (39) of the cone (24), said rivet nut (39) being positioned on the tip (40) of the cone (24).

9. Assembly according to one of claims 5 to 8, **characterised in that** the cowl (20) has an external surface (23) that is substantially uniform.

10. Assembly according to one of claims 5 to 9, **characterised in that** the cowl (20) has an internal surface (25) that is complementary with an external surface (26) of the cone (24).
